# EUROPEAN PATENT APPLICATION

(11) **EP 2 669 969 A1**
(43) Date of publication of application: **04.12.2013**
(21) Application number: 13161722.7
(22) Date of filing: 28.03.2013
(51) Int. Cl.: H01M 2/04, H01M 2/08, H01M 2/36, H01M 10/42

(54) **Rechargeable battery**

(30) Priority: 31.05.2012 US 201261653896 P; 14.09.2012 US 201213618505
(71) Applicant: Samsung SDI Co., Ltd., Gyeonggi-do 446-557 (KR)
(72) Inventor: Hur, Jong-Hwa, 446-557 Gyeonggi-do (KR); Heo, Sang-Do, 446-557 Gyeonggi-do (KR)
(74) Representative: Mounteney, Simon James

(57) **Abstract**

A rechargeable battery comprising: an electrode assembly, a protection circuit assembly, a liquid electrolyte and a case, said protection circuit assembly (20) being an insulated assembly and comprising a circuit board (21), wherein said protection circuit assembly (20) is connected to said electrode assembly (10) and the case accommodates said electrode assembly (10) and said liquid electrolyte the protection circuit assembly (20) sealing an opening in said case (30), the rechargeable battery further comprising a hole (70, 270, 470, 570) through said protection circuit assembly (20) for introduction of said electrolyte into the case (30), wherein the hole (70, 270, 470, 570) is sealed.

## Description

### BACKGROUND

### 1. Field

This disclosure relates to a rechargeable battery which can simplify a rechargeable battery assembling process.

### 2. Description of the Related Art

A rechargeable battery can be repeatedly charged and discharged, unlike a primary battery that cannot be recharged. A low-capacity rechargeable battery is used for small portable electronic devices, such as mobile phones, laptop computers, and camcorders. A large-capacity battery is used as a power source for driving motors, such as for hybrid vehicles.

A rechargeable battery includes a bare cell and a protection circuit module (PCM) protecting the bare cell. The protection circuit module includes a circuit board having a protection circuit to prevent the bare cell from overcharging, overdischarging, overcurrent, and short-circuiting and protection parts mounted on the circuit board.

The protection circuit module is assembled with the bare cell by a molding portion formed of insulating resin filled between the protection circuit module and the bare cell). The bare cell includes an insulation tape surrounding an electrode assembly, a cap plate, and an insulation holder provided between the electrode assembly and the cap plate, thereby having an electrical insulation structure and a sealing structure between the electrode assembly and the protection circuit module.

Accordingly, the number of parts of the bare cell is increased, and the assembling process of the bare cell and the protection circuit module becomes complicated.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery which can reduce the number of parts and simplify the assembling process.

In a first aspect the present invention provides a rechargeable battery comprising: an electrode assembly, a protection circuit assembly, a liquid electrolyte and a case, said protection circuit assembly being an insulated assembly and comprising a circuit board, wherein said protection circuit assembly is connected to said electrode assembly and the case accommodates said electrode assembly and said liquid electrolyte the protection circuit assembly sealing an opening in said case, the rechargeable battery further comprising a hole through said protection circuit assembly for introduction of said electrolyte into the case, wherein the hole is sealed.

In an embodiment a rechargeable battery is provided including: an electrode assembly performing charging and discharging operations; a protection circuit module insulation assembly; and a case accommodating the electrode assembly and bonded to the protection circuit module insulation assembly, the protection circuit module insulation assembly further including: an electrolyte injection opening formed by penetration; and a sealing plug sealing the electrolyte injection opening.

In a further aspect, the present invention provides a method of manufacturing a rechargeable battery, the method comprising: providing a protection circuit assembly with a hole extending through said assembly; connecting said protection circuit assembly to an electrode assembly; inserting said electrode assembly into a case; sealing the electrode assembly in the case with said seal being at least partially provided by said protection circuit assembly; injecting liquid electrolyte into the case through said hole; and sealing said hole.

According to an embodiment, the rechargeable battery is manufactured by a process of inserting the electrode assembly into the case when the protection circuit module insulation assembly and the electrode assembly are connected, and bonding the protection circuit module insulation assembly to the case, thereby reducing the number of parts and simplifying the assembling process.

### BRIEF DESCRIPTION OF THE DRAWINGS

FIG. 1 is an exploded perspective view of a rechargeable battery according to a first exemplary embodiment of the present invention.
FIG. 2 is a perspective view of a rechargeable battery according to a first exemplary embodiment of the present invention.
FIG. 3 is a cross-sectional view taken along line III-III of FIG. 2.
FIG. 4 is a cross-sectional view of the protection circuit module insulation assembly of FIG. 3.
FIG. 5 is a cross-sectional view of a protection circuit module insulation assembly of a rechargeable battery according to a second exemplary embodiment of the present invention.
FIG. 6 is a cross-sectional view of a protection circuit module insulation assembly of a rechargeable battery according to a third exemplary embodiment of the present invention.
FIG. 7 is a cross-sectional view of a protection circuit module insulation assembly of a rechargeable battery according to a fourth exemplary embodiment of the present invention.
FIG. 8 is a cross-sectional view of a protection circuit module insulation assembly of a rechargeable battery according to a fifth exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

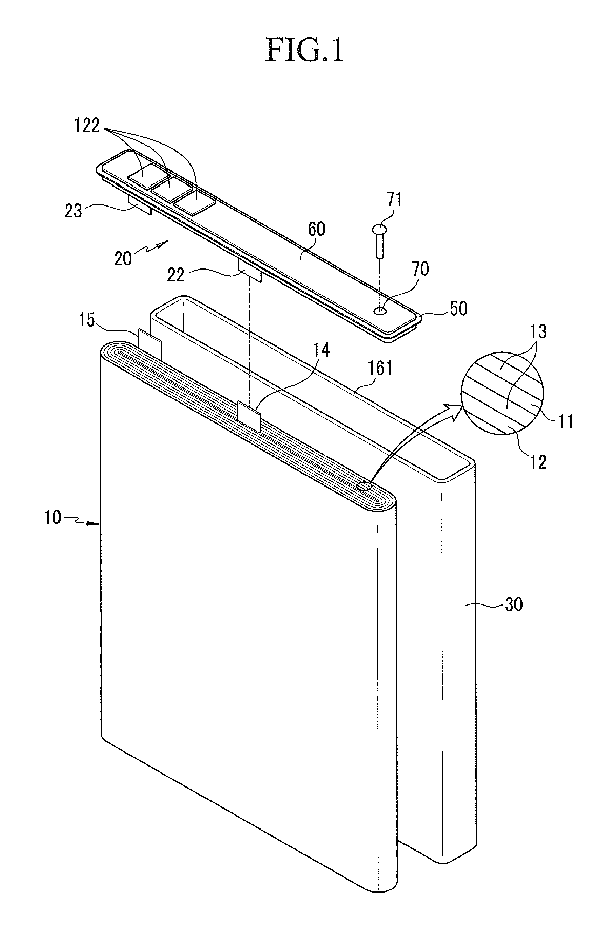

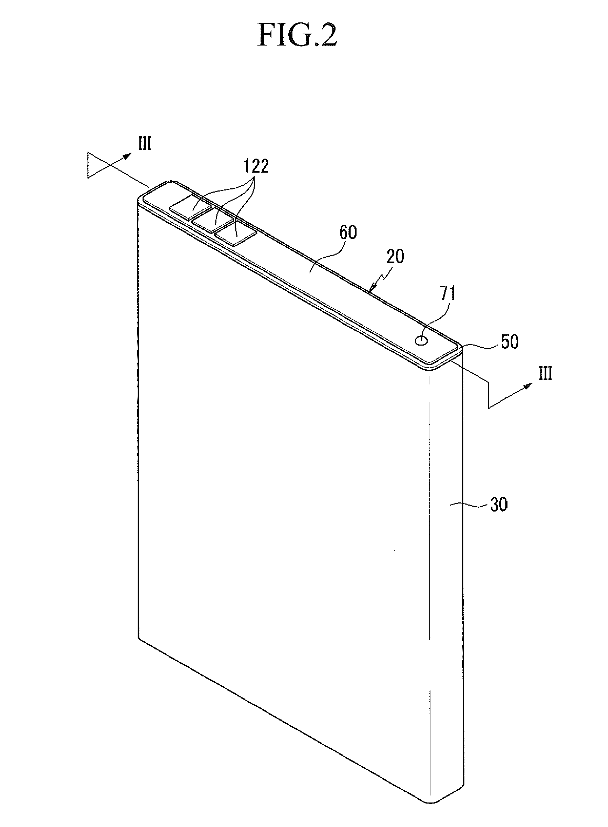

FIG. 1 is an exploded perspective view of a rechargeable battery according to a first embodiment of the present invention. FIG. 2 is a perspective view of a rechargeable battery according to the first embodiment of the present invention.

Referring to FIGS. 1 and 2, the rechargeable battery of the first embodiment includes an electrode assembly 10 performing charging and discharging operations, a protection circuit module insulation assembly 20, and a case 30 receiving the electrode assembly 10 and bonded to the protection circuit module insulation assembly 20.

The electrode assembly 10 is formed by stacking a first electrode (hereinafter, "positive electrode") 11 and a second electrode (hereinafter, "negative electrode") on both sides of a separator 13 serving as an electrical insulator, with the insulator 13 interposed therebetween, and winding them in a jelly-roll shape.

The electrode assembly 10 includes a first electrode lead (hereinafter, "positive lead") 14 connected to the positive electrode 11 and a negative lead 15 connected to the negative electrode 12, and may be electrically connected to the protection circuit module insulation assembly 20.

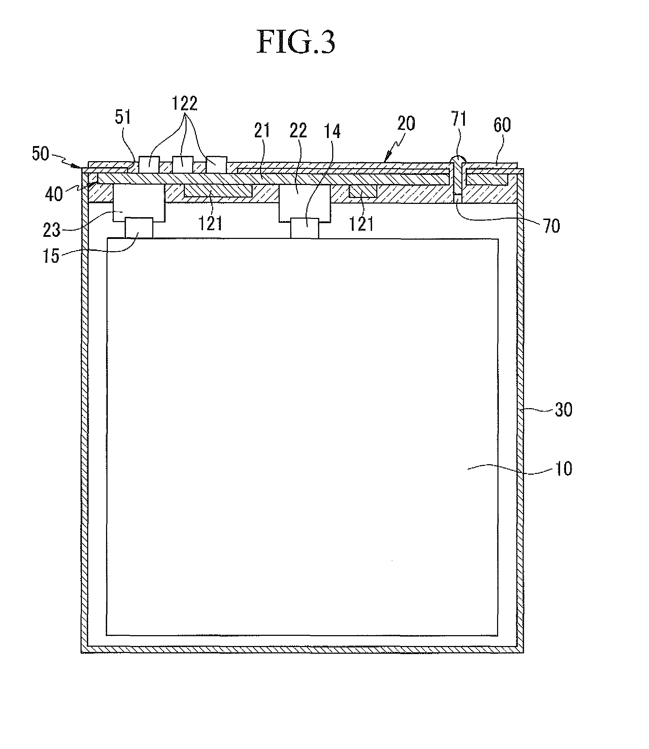

FIG. 3 is a cross-sectional view taken along line III-III of FIG. 2. Referring to FIGS. 1 to 3, the protection circuit module insulation assembly 20 is formed integrally with a protection circuit module 40, a metal member 50, and a molding portion 60, thereby sealing an opening of the case 30

The protection circuit module 40 includes a circuit board 21 having a protection circuit to protect the electrode assembly 10 from overcharging, overdischarging, overcurrent, and short-circuiting and a first electrode tab (hereinafter, "positive electrode tab") 22 and a second electrode tab (hereinafter, "negative electrode tab") 23 that are connected to the circuit board 21.

The circuit board 21 has a wiring pattern printed on the board, and the wiring pattern may be provided in a plurality of layers having an insulation structure. In an example, the circuit board 21 has a rectangular thin plate-like shape which longitudinally extends along the lengthwise direction so as to be inserted into the opening of the case 30, and is formed to be narrow in the widthwise direction crossing the lengthwise direction.

The positive electrode tab 22 is installed near a substantially near the center of a first surface (inner surface in FIG. 3) of the circuit board 21, and electrically connected to the circuit board 21. For example, the positive electrode tab 22 is a nickel tab or aluminum tab made of an electrical conductive material, and is welded to the positive electrode lead 14 to electrically connect the circuit board 21 and the electrode assembly 10.

The negative electrode tab 23 is installed at one end of the first surface of the circuit board 21 and electrically connected to the circuit board 21. For example, the negative electrode tab 23 is a nickel tab or aluminum tab made of an electrical conductive material, and is welded to the negative electrode lead 15 to electrically connect the circuit board 21 and the electrode assembly 10.

The circuit board 21 includes a protection device 121 and an external terminal 122 that are mounted in a printed pattern to form a protection circuit. The protection device 121 is disposed on the first surface (inner surface) of the circuit board 21, and may consist of devices such as a control IC, a charging/discharging switch, etc. The external terminal 122 is disposed on a second surface (outer surface in FIG. 3) of the circuit board 21, and connected to an exfiernai load to perform discharging or connected to a charger to perform charging.

That is, the first surface (inner surface) of the circuit board 21 faces the electrode assembly 10 at the inside of the protection circuit module insulation assembly 20, and the second surface (outer surface) thereof faces the outside of the protection circuit module insulation assembly 20.

The metal member 50 extends along the periphery of the protection circuit module insulation assembly 20 to protrude from the edges of the protection circuit module insulation assembly 20. A protruding part of the metal member 50 is bonded to an opening at one side of the case 30 by welding, thereby allowing the protection circuit module insulation assembly 20 to seal the opening of the case 30.

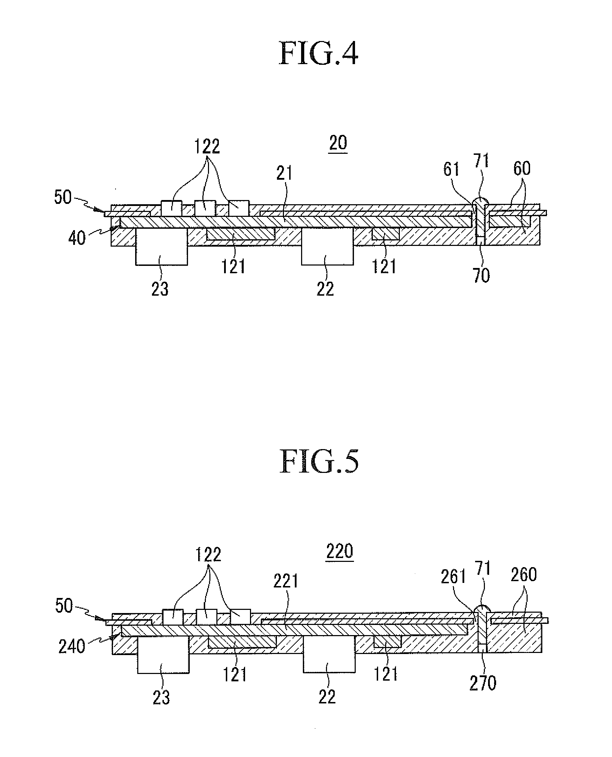

FIG. 4 is a cross-sectional view of the protection circuit module insulation assembly 20 of FIG. 3. Referring to FIGS. 3 and 4, the metal member 50 is formed in a rectangular plate-like shape and bonded to the top of the protection circuit module 40.

That is, the metal member 50 is bonded to the top of the circuit board 21, and further protrudes outwardly from a lateral end of the circuit board 21. Accordingly, the protection circuit module 40 and the circuit board 21 are inserted into the case 30, and the metal member 50 is stopped at an edge of the opening of the case 30.

The protrusion range of the protruding part of the metal member 50 corresponds to the edge thickness of the case 30 having the opening, thereby preventing the protruding part and a welding part of the case 30 from protruding beyond a lateral surface of the case 30.

The metal member 50 and the protection circuit module 40, i.e., the metal member 50 and the circuit board 21, are electrically insulated from each other. For example, the metal member 50 and the circuit board 21 may be bonded by fusion bonding or the like, and a buffer layer (not shown) may be provided for insulation between them.

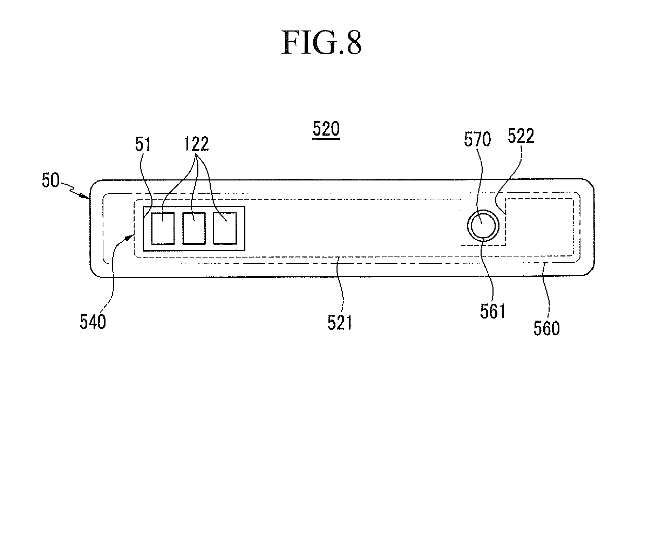

The metal member 50 has a through hole 51 (see FIGS. 3 and 8) at a location corresponding to the external terminal 122, which allows the external terminal 122 formed on the second surface (outer surface) of the circuit board 21 to be protruded beyond the protection circuit module insulation assembly. As the metal member 50 is disposed on the second surface of the circuit board 21, the protection device 121 mounted on the first surface of the circuit board 21 is not interfered with the metal member 50.

The protection circuit module insulation assembly 20 is formed in an integral manner, with the bonded protection circuit module 40 and metal member 50 buried in the molding portion 60. The molding portion 60, which is formed of resin, may be formed by insert molding.

That is, the bonded protection circuit module 40 and metal member 50 are installed inside a mold and molten resin is injected into the mold, so that the molten resin surrounds the outer parts of the protection circuit module 40 and metal member 50. As the molten resin is coagulated, the molding portion 60 is formed. Accordingly, the protection circuit module 40, the metal member 50, and the molding portion 60 are integrally formed.

Since the molding portion 60 buries the bonded protection circuit module 40 and metal member 50 therein in such a manner as to surround the first surface and lateral ends of the circuit board 21 and the top surface of the metal member 50, the protection device 121 and the circuit board 21 can be protected safely from the outside environment and an electrolyte filled in the case 30.

The positive electrode tab 22 and negative electrode tab 23 connected and installed to the first surface (inner surface) of the circuit board 21 are exposed to the underside of the molding portion 60 so as to face the electrode assembly 10, and respectively connected to the positive electrode lead 14 and the negative electrode lead 15.

In this manner, the protection circuit module insulation assembly 20 is formed integrally with the protection circuit module 40, and hence the number of parts of the rechargeable battery can be reduced. The rechargeable battery can be manufactured by a process of inserting the electrode assembly 10 into the case 30 when the protection circuit module insulation assembly 20 and the electrode assembly 10 are connected, and bonding the protection circuit module insulation assembly 20 to the opening of the case 30. Accordingly, the assembling process of the rechargeable battery is simplified.

The manufacturing process of the rechargeable battery further includes a step of accommodating the electrode assembly 10 in the case 30 and injecting the electrolyte when the protection circuit module insulation assembly 20 is assembled to the case 30. Accordingly, the protection circuit module insulation assembly 20 has an electrolyte injection opening 70 so that the electrolyte is injected into the rechargeable battery, i.e., the case 30.

Referring to FIGS. 3 and 4, the electrolyte injection opening 70 is formed in such a structure that it penetrates the protection circuit module insulation assembly 20 and connects the inside and outside of the rechargeable battery.

The electrolyte injection opening 70 is sealed with a sealing plug 71 after injecting the electrolyte. For example, the electrolyte injection opening 70 may be formed by penetrating the molding portion 60, the metal member 50, the protection circuit module 40, and the molding portion 60.

The electrolyte injection opening 70 is formed by penetrating the molding portion 60 at the inside and outside of the protection circuit module insulation assembly 20, and is formed as a penetrating hole of the circuit board 21 of the protection circuit module 40 and the metal member 50. An insulating layer 61 is formed along an inner wall of the penetrating hole, and the insulating layer 61 substantially defines the electrolyte injection opening 70 at corresponding regions of the circuit board 21 and metal member 50.

For example, the insulating layer 61 may be formed by coagulating the molten resin forming the molding portion 60. That is, the insulating layer 61 allows the whole electrolyte injection opening 70 to be formed of the same material as the molding portion 60, thereby contributing to eliminating a step for insulating the penetrating hole of the circuit board 21 and the metal member 50.

The electrolyte injection opening 70 is formed by the resin that forms the molding portion 60 forming the inside and outside of the protection circuit module insulation assembly 20 and forms the insulating layer 61 of the penetrating hole of the circuit board 21 and metal member 50. Accordingly, the sealing plug 71 may perform a sealing function while making contact with the resin, which is the same material as itself, in the entire parts of the electrolyte injection opening 70.

That is, even when the electrolyte injection opening 70 is formed by penetrating layers of different materials, i.e., the circuit board 21, the metal member 50, and the molding portion 60 are formed of different materials, the sealing plug 71 can exhibit excellent sealing performance by preventing partial thermal deformation.

Hereinafter, various embodiments of the present invention will be illustrated. The description of the same components as the first embodiment and the above-mentioned embodiments will be omitted and different components will be described.

FIG. 5 is a cross-sectional view of a protection circuit module insulation assembly of a rechargeable battery according to a second embodiment of the present invention. Referring to FIG. 5, in the protection circuit module insulation assembly 220 of the second embodiment, the protection circuit module 240, i.e., the circuit board 221, is formed apart from the electrolyte injection opening 270. That is, the electrolyte injection opening 270 is formed in such a structure that it penetrates the protection circuit module insulation assembly 220 and connects the inside and outside of the rechargeable battery.

The electrolyte injection opening 270 is sealed with a sealing plug 71 after injecting the electrolyte. For example, the electrolyte injection opening 270 may be formed by penetrating the molding portion 260, the metal member 50, and the molding portion 260.

The electrolyte injection opening 270 is formed by penetrating the molding portion 260 at the inside and outside of the protection circuit module insulation assembly 220, and is formed as a penetrating hole of the metal member 50. An insulating layer 261 is formed along an inner wall of the penetrating hole, and the insulating layer 61 substantially defines the electrolyte injection opening 270 at a corresponding region of the metal member 50. The electrolyte injection opening 270 is provided at one side of the circuit board 221 of the protection circuit module 240.

In the first embodiment, the electrolyte injection opening 70 is formed by penetrating the circuit board 21 as the circuit board 21 is formed across the electrolyte injection opening 70. In contrast, in the second embodiment, the electrolyte injection opening 270 is not provided in the circuit board 221. Accordingly, the circuit board 221 and metal member 50 of the second embodiment achieves a more effective electrical insulation structure at the electrolyte injection opening 270 than the first embodiment.

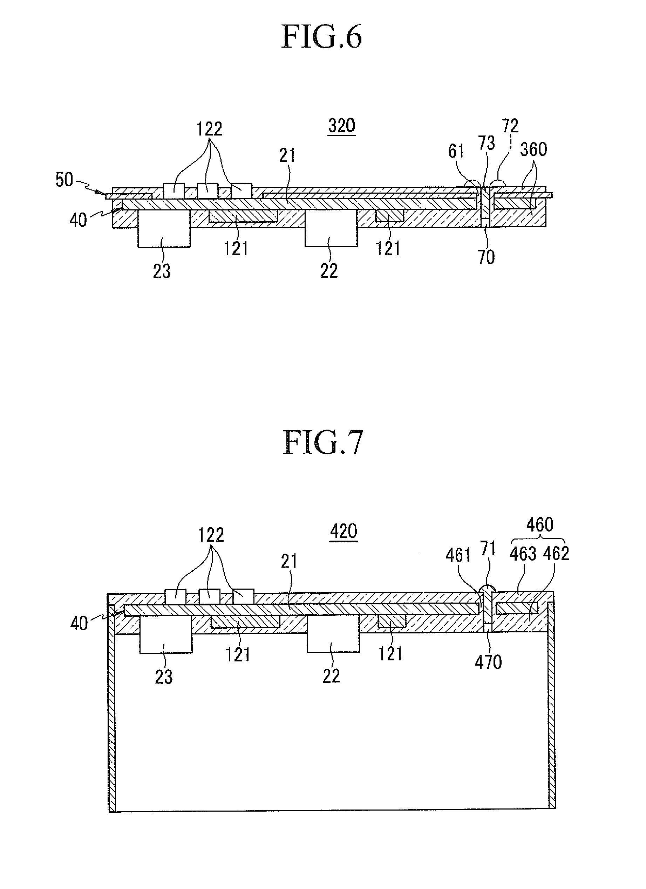

FIG. 6 is a cross-sectional view of a protection circuit module insulation assembly of a rechargeable battery according to a third embodiment of the present invention. Referring to FIG. 6, in the protection circuit module insulation assembly 320 of the third embodiment, the molding portion 360 has a protruding portion 72 (before electrolyte injection) formed in the vicinity of the electrolyte injection opening 70. For instance, the protruding portion 72 forms a sealing plug 73 which is thermally deformed and moved after electrolyte injection and inserted into the electrolyte injection opening 70 to seal the electrolyte injection opening 70.

That is, the sealing plug 73 formed by deforming the protruding portion 72 seals the electrolyte injection opening 70. The sealing plug 73 can have excellent sealing performance because it is formed of the same material as the insulating layer 61 and the molding portion 360. In the third embodiment, there is no need for a separate sealing plug for sealing the electrolyte injection opening 70.

In the first and second embodiments, the electrolyte injection opening 70 is sealed with a separate sealing plug 71. In contrast, in the third embodiment, the sealing plug 73 is formed by deforming the protruding portion 72 provided at the molding portion 360.

Accordingly, the sealing plug 73 formed by the protruding portion 72 of the molding portion 360 can achieve the sealing performance of the electrolyte injection opening 70 and further reduce the number of parts of the rechargeable battery.

FIG. 7 is a cross-sectional view of a protection circuit module insulation assembly of a rechargeable battery according to a fourth embodiment of the present invention. Referring to FIG. 7, the protection circuit module insulation assembly 420 of the fourth embodiment includes a protection circuit module 40 and a molding portion 460 without having a metal member.

The protection circuit module insulation assembly 420 is formed in an integral manner, with the protection circuit module 40 buried in the molding portion 460. As the molding portion 460 surrounds the first surface, second surface, and lateral ends of the circuit board 21, the protection device 121 and the circuit board 21 can be protected safely from the outside environment and the electrolyte in the case 30.

The molding portion 460 includes an insert portion 462 inserted into the case 30 and a stopping portion 463 further protruding laterally from the insert portion 462 and stopped at an edge of the opening of the case 30. When assembling the rechargeable battery, the electrode assembly 10 is inserted into the case 30, and then the insert portion 462 of the molding portion 460 is inserted into the opening of the case 30. At this point, the stopping portion 463 of the molding portion 460 defines a maximum insertion range of the molding portion as it is stopped at the edge of the opening of the case 30.

When assembling the protection circuit module insulation assembly 420 and the case 30, the inner surface of the case 30 and the insert portion 462 of the molding portion 460 contacting it may be bonded by thermal fusion bonding. That is, the protection circuit module insulation assembly 420 is installed to have an electrical insulation structure at the case 30, and is able to seal the opening of the case 30.

In the first to third embodiments, the metal member 50 and the case 30 are bonded by welding. In contrast, in the fourth embodiment, the molding portion 460 is bonded to the case 30 by thermal fusion bonding. In this way, the protection circuit module insulation assemblies 20, 220, 320, and 420 can be bonded to the case 30 in various methods and structures depending on their structure.

Moreover, the electrolyte injection opening 470 penetrates the protection circuit module insulation assembly 420 and connects the inside and outside of the rechargeable battery, and is sealed with the sealing plug 71 after electrolyte injection. For example, the electrolyte injection opening 470 may be formed by penetrating the molding portion 460 and the circuit board 21.

The electrolyte injection opening 470 is formed by penetrating the molding portion 460 through the protection circuit module insulation assembly 420, and is formed as a penetrating hole of the circuit board 21. An insulating layer 461 is formed along an inner wall of the penetrating hole, and the insulating layer 461 substantially defines the electrolyte injection opening 470 at a corresponding region of the circuit board 21.

In the first embodiment, the electrolyte injection opening 70 is formed by penetrating the circuit board 21 and the metal member 50. In contrast, in the fourth embodiment, the electrolyte injection opening 470 is formed in the circuit board 21 without using the metal member. Accordingly, the circuit board 21 of the fourth embodiment achieves a more effective electrical insulation structure at the electrolyte injection opening 470 than the first embodiment.

FIG. 8 is a cross-sectional view of a protection circuit module insulation assembly of a rechargeable battery according to a fifth embodiment of the present invention. Referring to FIG. 8, in the protection circuit module insulation assembly 520 of the fifth embodiment, the protection circuit module 540, i.e., the circuit board 521, is formed apart from the electrolyte injection opening 570.

The electrolyte injection opening 570 is formed by penetrating the molding portion 560 through the protection circuit module insulation assembly 520, and is formed as a penetrating hole of the metal member 50. An insulating layer 561 is formed along an inner wall of the penetrating hole, and the insulating layer 561 substantially defines the electrolyte injection opening 570 at a corresponding region of the metal member 50.

The circuit board 521 has a cutout portion 522 opened at one widthwise side. The cutout portion 522 makes it possible to ensure a wide effective area of the circuit board 521 while preventing interference with the circuit board 521 and the electrolyte injection opening 570. That is, the circuit board 521 of the fifth embodiment can have a wider area at one side of the electrolyte injection opening 570, as compared to the circuit board 221 of the second embodiment.

In the second embodiment, the circuit board 221 is completely removed from one side of the electrolyte injection opening 270 in the lengthwise direction. In contrast, in the fifth embodiment, the cutout portion 522 formed by removing a part of the circuit board is provided at one widthwise side of the circuit board 521. Accordingly, in the fifth embodiment, the circuit board 521 and the metal member 50 form an electrical insulation structure at the electrolyte injection opening 270, and also contributes to widening the effective area of the circuit board 521.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery comprising: an electrode assembly, a protection circuit assembly, a liquid electrolyte and a case, said protection circuit assembly (20) being an insulated assembly and comprising a circuit board (21), wherein said protection circuit assembly (20) is connected to said electrode assembly (10) and the case accommodates said electrode assembly (10) and said liquid electrolytethe protection circuit assembly (20) sealing an opening in said case (30), the rechargeable battery further comprising a hole (70, 270, 470, 570) through said protection circuit assembly (20) for introduction of said electrolyte into the case (30), wherein the hole (70, 270, 470, 570) is sealed.

2. A rechargeable battery according to claim 1, wherein the hole (70, 270, 470, 570) has an internal surface, and said internal surface is lined with an insulator (61, 261).

3. A rechargeable battery according to claim 2, wherein the protection circuit assembly (20) comprises a molded region (60, 260, 360, 460, 560) and said insulator (61, 261) which lines said hole (70, 270, 470, 570) is formed from the same material as the molded region (60, 260, 360, 460, 560).

4. A rechargeable battery according to any preceding claim, wherein the protection circuit assembly (20) comprises a molded region (360), said hole (70) is formed through the molded region (360) and the hole (70) is sealed by material of said molded region.

5. A rechargeable battery according to any preceding claim, wherein the protection circuit assembly (20) comprises a protection circuit unit (121), wherein the protection circuit unit (121) is provided facing the electrode assembly (10).

6. A rechargeable battery according to any preceding claim, wherein the hole (70, 270, 470, 570) is sealed by a sealing plug (71).

7. A rechargeable battery according to any preceding claim, wherein the hole (70, 470, 570) extends through the circuit board (21) of said protection circuit assembly (20).

8. A rechargeable battery according to any of claims 1 to 6, wherein said circuit board (21) comprises a cut-out portion (522), said cut out portion having edges, wherein the said hole (570) is formed through said cut-out portion (522) and spaced apart from its edges.

9. A rechargeable battery according to any preceding claim, wherein said protection circuit assembly (20) comprises a metal member (50) which extends around the periphery of said protection circuit assembly, wherein said metal member (50) seals the protection circuit assembly to the case (30).

10. A rechargeable battery according to any of claims 1 to 8, wherein said protection circuit assembly (20) comprises a molded region (460), and said molded region (460) seals the protection circuit assembly (20) to the case (30).

11. A method of manufacturing a rechargeable battery, the method comprising:
providing a protection circuit assembly (20) with a hole (70, 270, 470, 570) extending through said assembly (20);
connecting said protection circuit assembly (20) to an electrode assembly (10);
inserting said electrode assembly (10) into a case (30);
sealing the electrode assembly (10) in the case (30) with said seal being at least partially provided by said protection circuit assembly (20);
injecting liquid electrolyte into the case (30) through said hole (70, 270, 470, 570); and
sealing said hole (70, 270, 470, 570).

12. A method according to claim 11, wherein the protection circuit assembly (20) comprises a molded region (60, 260, 360, 460, 560), the method comprising coagulating the material of said molded region (60, 260, 360, 460, 560), to line an inner surface of said hole (70, 270, 470, 570) with an insulator (61,261).

13. A method according either of claims 11 or 12, wherein the protection circuit assembly (20) comprises a circuit board (21) and the hole (70, 270, 470, 570) extends through said circuit board (21).

14. A method according to any of claims 11 to 13, wherein the hole (70, 270, 470, 570) is sealed by a sealing plug.

15. A method according to any of claims 11 to 14, wherein the hole (70) is provided in a molded region (360) and wherein there is an excess of the material of said molded region (360) around the hole, the method further comprising using the excess of molded material to seal said hole (70).
